# EUROPEAN PATENT APPLICATION

(11) **EP 0 845 346 A1**
(43) Date of publication of application: **03.06.1998**
(21) Application number: 97121002.6
(22) Date of filing: 28.11.1997
(51) Int. Cl.: B29C 70/12, B29B 15/12

(54) **Laminar product of a thermosetting resin mixture and fibrous material**

(30) Priority: 29.11.1996 BE 9600994
(71) Applicant: DSM N.V., 6411 TE Heerlen (NL); PERSTORP AB, 284 80 Perstorp (SE)
(72) Inventor: Kroezen, Antonius Bernardus Johannes, 6141 CA Sittard (NL); Ozinga, Cornelis, 6121 HG Born (NL); Janse, Gerardus Hubertus Anna, 6051 BW Maasbracht (NL); Walter, Eva Brita, 28437 Perstorp (SE)

(57) **Abstract**

The invention relates to a laminar product comprising fibrous material and a thermosetting resin mixture as matrix, and is characterized in that the fibrous material does not contain a binder and is composed of discontinuous fibres, some of which are oriented virtually perpendicularly to the plane of the sheet. The invention also relates to a process for the preparation of the laminar product.

## Description

The invention relates to a laminar product comprising fibrous material and a thermosetting resin mixture as matrix. The invention also relates to a process for manufacturing the product.

Such a product is disclosed in EP-A-0 304 133. In EP-A-0 304 133, a laminar product is described which is made of a thermosetting resin mixture, in particular an aminoplastic formaldehyde mixture, and fibrous material in the form of a nonwoven material or mat. The fibrous material always contains a binder to hold the fibres present therein together and to render the fibrous material readily manageable, for example during the impregnation of the fibres with the matrix.

The known product is usually processed to form a final product by introducing one or more laminar products into a mould, whereafter they are compressed at elevated temperature and pressure to form the final product. During the compression, flow takes place from the product to places in the mould in which the product was not placed. This flow serves to ensure that the fibrous material is well distributed in the final product. All this means that, during the compression, the fibrous material has to be entrained with the flowing thermosetting resin mixture.

The known product has the disadvantage that, during the flow moulding to form the final product, the flow is insufficient so that not all the fibrous material ends up in the desired place in the product.

The object of the present invention is to provide a laminar product comprising a thermosetting resin mixture and fibrous material which does not have this disadvantage.

Surprisingly, this is achieved in that the fibrous material does not contain a binder and is composed of discontinuous fibres, some of which are oriented virtually perpendicularly to the plane of the sheet.

Within the scope of this application, discontinuous fibres are understood to mean fibres having a length less than a characteristic longitudinal dimension of the final product to be manufactured. Particularly suitable fibres have a weight-average length of between 1 and 80 mm, preferably between 6 and 50 mm.

Within the scope of this application, 'virtually perpendicularly' is understood as meaning that the fibres are oriented approximately perpendicularly to the plane of the sheet. It should be clear that it is not possible in practice to orient fibres perfectly perpendicularly, nor is this necessary for the invention. Thus, it may occur, for example, that fibres are not oriented perpendicularly to the plane of the sheet over their entire length, but lie in the plane of the sheet over a part of their length.

According to the invention, as a result of using fibrous material, a laminar product is obtained which is extremely suitable for being processed by means of flow moulding.

Preferably, the laminar product according to the invention is characterized in that the fibrous material comprises a nonwoven, needle-punched mat.

Such a mat is known per se, for example, from US-3,883,333, in which a possible production method is also given for the mat. A nonwoven, needle-punched mat is composed of discontinuous fibres which are randomly oriented in the plane and some of which are oriented virtually perpendicularly to the plane by means of puncturing with needles.

A further advantage of the laminar product according to the invention is that the moisture sensitivity of the laminar product is markedly less than the moisture sensitivity of the known product. The heat resistance of the final product is also better as a result of using the product according to the invention. The dyeing capability of the laminar product furthermore appears to be better, meaning that both the stability and the brightness of the dyeing improves.

Preferably, the tensile strength of the fibrous material per unit width and per weight per unit area at 20°C is between 0.015 Nm/g and 15 Nm/g. In this connection, the weight per unit area of the fibrous material is defined as the weight in g of 1 m² of the fibrous material. The tensile strength per unit width is defined as the tensile strength of a strip of fibrous material having a width of 1 m. The lower limit of the tensile strength is determined by the strength which is necessary to withstand the forces which occur during the manufacture of the laminar product, and more particularly, during the impregnation of the fibrous material with the thermosetting resin mixture. The tensile strength of the fibrous material can easily be determined in a manner known to the person skilled in the art.

On the other hand, the appropriate strength of the fibrous material is also dependent on the rheological properties of the thermosetting resin mixture. The tensile strength of the fibrous material and the viscosity of the resin mixture at the flow-moulding temperature should preferably be adapted to one another in such a way that, during the flow moulding, the fibrous material is sufficiently pulled apart for a good distribution of the material over the product to be obtained. If this occurs to an insufficient extent, a product is obtained which has nonhomogeneous mechanical properties. A relatively large amount of force is applied during the use of the product, in particular, to projections, ridges and rims. It is therefore important that the fibrous material is also entrained therein during flow moulding.

With the greatest preference, the tensile strength of the fibrous material per unit width and per weight per unit area at 20°C is between 0.15 Nm/g and 1.50 Nm/g. A good compromise is thereby reached between, on the one hand, a good flow during processing to form the final product and, on the other hand, a good strength of the final product.

The tensile strength of the fibrous material can easily be adjusted by the person skilled in the art. Factors which influence the strength of a needle-punched mat are, for example, the number of needles per unit area with which the material is needle-punched, the average fibre length in the mat and the mutual proportion of fibres having orientation out of the plane and in the plane.

The density of the fibrous material can be chosen within wide limits. Suitable densities are, for example, between 50 and 1000 kg/m³ for compression under a pressure of 1 kg/dm². Preferably, however, the density of the fibrous material is less than 300 kg/m³ for compression under a pressure of 1 kg/dm². This achieves the result that no contamination of the impregnating machine occurs during the production of the laminar product. This is a big advantage because the impregnating machine has to be stopped less often in order to clean it. In addition, a fibrous product is obtained which contains less contamination, such as residual, dried resin particles and the like. This further benefits the mechanical and flow properties.

A further advantage of the laminar product according to the invention consists in the fact that, after an object is obtained therewith by means of compression, the visibility of fibrous material situated on the surface of the object is markedly less than is the case for the known product.

The weight per unit area of the fibrous material can be chosen within wide limits. Suitable weights per unit area are, for example, between 100 and 2000 g/m². Preferably, a weight per unit area of between 300 and 1000 g/m² is used. As a result, a more rapid processing to form the final product is achieved. In addition, it is possible with the laminar product according to this preferred embodiment, to remove virtually all the water added and necessary for the production of the product by drying. This is not possible in the case of the existing product if fibrous material is used therein which has a comparable weight per unit area. With the greatest preference, the fibrous product is characterized in that the fibrous material has a weight per unit area of 500 g/m² to 800 g/m². This achieves a favourable compromise between the rate of production of the fibrous product and the rate of processing to form the final product.

The thermosetting resin in the laminar product according to the invention can, in principle, be any thermosetting resin. The advantages of the product according to the invention are manifested, in particular, if the thermosetting resin contains a resin chosen from the group comprising aminoplastic-formaldehyde and/or phenol-formaldehyde resins. Such resin mixtures usually have a low viscosity at the processing temperature of the product, as a result of which the fibrous material of the known product is not distributed well over the mould cavity during flow moulding. Particularly suitable thermosetting resins are the aminoplastic formaldehyde resins. Examples of such resins are those which contain urea, melamine or benzoguanamine as aminoplastic. Preferably, melamine is used because of superior mechanical and flame-resistant properties. The laminar product according to the invention has, in this case, the additional advantage that the flame-resistant properties are markedly better than those of the known laminar product containing melamine formaldehyde. The dyeing capability is also improved further.

The aminoplastic formaldehyde resin can be manufactured in a manner known to the person skilled in the art by reacting an aminoplastic and formaldehyde in water. The ratio of, for example, formaldehyde and melamine is, normally speaking, between 1.3 and 2.5, preferably between 1.5 and 2.0. It is also possible to add plasticizers such as, for example, sorbitol, ε-caprolactam, ethylene glycol, trioxitol, toluenesulphonamide and benzoacetoguanamine.

All commercially obtainable fibres can be used as fibrous material. Suitable fibres are, for example, carbon fibres, glass fibres, rock fibres, cottonwool fibres, fibres based on highly oriented thermoplastics, such as aramids and UHMWPE fibres, polyamide fibres and cellulose fibres. Preferably, glass fibre is used.

The laminar product according to the invention may also contain all kinds of fillers. Said fillers are the same as the conventional fillers for laminar products based on, for example, unsaturated polyester resin. For example, lime, calcium carbonate, clay, carbon particles, silica and/or metal particles are used as fillers. Preferably, the laminar product according to the invention contains, in addition to melamine-formaldehyde resin, also aluminium trihydrate and calcium carbonate as filler. Moreover, the laminar product may also contain catalysts, mould release agents, dyestuffs and other conventional additives. Conventional catalysts, such as, for example, p-toluenesulphonic acid and boric acid, can be used as catalysts.

Mechanical properties which can satisfactorily be used in practice are achieved if 5 - 50% by weight of fibrous material and 95 - 50% by weight of resin mixture are used, the resin mixture preferably containing 15 - 80% by weight of fillers and 85 - 20% by weight of aminoplastic formaldehyde resin. More particularly, 10 - 25% by weight of fibrous material and 90 - 75% by weight of resin mixture are preferably used, the resin mixture containing 40 - 70% by weight of fillers and 60 - 30% by weight of resin. An additional advantage of the laminar product according to the invention is that it achieves the same mechanical properties as the known product, but at a lower content of fibrous material in the product.

The invention also relates to a process for manufacturing a laminar product in which fibrous material according to the invention, as described above, is impregnated with a thermosetting resin mixture dissolved in water and the impregnated material obtained is dried.

The amount of resin mixture which is used per m² of fibrous material is easy to adjust by removing resin mixture with the aid of, for example, rollers. By adjusting the viscosity of the aqueous resin mixture, more or less can also be applied to the fibrous material. As described above, the weight per unit area of the fibrous material may also determine the amount of resin mixture absorbed.

After the impregnation step, the water must substantially be removed to obtain a dry laminar product. A residual moisture content of less than 5% is found to give good results. Too much water may result in pores in the final product, which adversely affects the mechanical properties. The water can easily be removed in an oven through which the laminar product is pulled. Because the product is not, as is conventional in the case of similar products based on unsaturated polyester resin (SMC), manufactured between two films, the water can evaporate well to all sides.

The laminar products obtained after drying can very easily be processed to form products by means of flow moulding. The pressure used is usually between 10 and 200 bar, preferably between 50 and 100 bar. The usual moulding temperature, which also ensures the curing of the thermosetting resin is between 50 and 200°C, preferably between 140 and 170°C.

The products obtained have very good mechanical properties as a result of the excellent flow of the product according to the invention during the flow moulding. Typical mechanical properties for an average glass-fibre content of 20% by weight and glass fibre lengths of between 5 mm and 20 mm are: flexural strength (ASTM-D790) of 110 - 220 MPa, flexural modulus (ASTM-D790) of 15 - 25 GPa and impact strength (ISO 179) of 10 - 80 kJm⁻².

The laminar products can be used particularly satisfactorily in the manufacture of large moulded parts having, for example, ribs and projections, seat buckets, casings, fittings, bodywork components for lorries and cars. Particularly suitable applications are kitchen appliances, such as cooker-plate frames, oven doors and the like, seats and wallpanels in trains and public transport, and casings for electronic parts, such as used for example in ticketing and money provider systems. The particularly good fire-resistant properties, heat resistance, high-temperature dimensional stability, scratch resistance and good dyeing capability of the product are then of great advantage.

The invention will now be explained by reference to the following examples without being limited thereto.

### Example I

### Resin preparation

5 parts of caprolactam, 24 parts of water and 135 parts of formalin (30% formaldehyde in water having a pH of 9.4) were added to 100 parts of melamine. The condensation reaction was carried out at 95°C until the dilution capability at 20°C of the resin was 1.2 kg of resin per kg of water. The formaldehyde/melamine ratio was 1.7.

### Preparation of laminar product

In a blade mixer, 110 parts of CaCO₃ and 0.45 parts of p-toluenesulphonic acid (50% solids) were added to 100 parts of resin (composed of 55% by weight of solids and 45% by weight of water). Stirring was carried out until a homogeneous mixture was obtained. The viscosity was adjusted to 1 Pa·sec (Brookfield at 20°C).

The resin mixture was transferred to a bath of an impregnating machine of the type VITS™ (model LIA). A nonwoven, needle-punched glass-fibre mat having a weight per unit area of 600 g/m² (Syncomat™ NM600) supplied by the Syncoglas company in France was passed through the bath containing resin mixture. Excess resin mixture was removed by passing the impregnated glass-fibre mat between two rollers having a nip of 1 mm. The impregnated glass-fibre mat was then passed through an oven at a temperature of 140°C in the course of 5 min. The residual water content was 3% by weight. The average glass-fibre content was 20% by weight.

### Processing to form the final product

Two layers of laminar product, such as those obtained above, were placed on top of one another and compressed in a mould at a temperature of 150°C and a pressure of 100 bar. The press used was a 360 tonne parallel-travel press supplied by the Hoesch company in Germany.

The distribution of the glass fibres over the moulded objects was excellent. This indicates an excellent flow during the moulding.

Test specimens were sawn out of the panels obtained for bending tests (ISO 178) and Charpy impact properties (ISO 179). The following mechanical properties were measured: a flexural strength of 149 MPa, a modulus of rigidity of 19.7 GPa, and a Charpy impact strength of 32 kJ/m².

### Example II

A laminar product was manufactured in the same way as in Example I. A number of laminal products were then introduced into a square female mould having a side of 40 cm, only 50% of the mould surface being covered (lining percentage of 50%). Then, using of the same press and press conditions as in Example 1, a square panel was moulded which had a thickness of 3 mm. The closure speed of the press platens during the moulding was 3 mm/sec. The force required for the flow of the stack of laminar products was measured during the moulding. This force (the flow force) is defined as the first maximum in a force/displacement curve recorded at a constant closure speed. The flow force was 546 kN.

### Comparative Example A

A melamine-formaldehyde resin having the same composition as in Example I was prepared in the same way as in Example I. In a blade mixer, 100 parts of CaCO₃ and 0.45 parts of p-toluenesulphonic acid (50% solids) were then added to 100 parts of resin (composed of 55% by weight of solids and 45% by weight of water). Stirring was carried out until a homogeneous mixture was obtained. The viscosity was adjusted to 1 Pa·sec (Brookfield at 20°C).

The resin mixture was transferred to a bath of an impregnating machine of the type VITS™ (model LIA). A nonwoven glass-fibre mat (weight per unit area 300 g/m²) containing a binder based on polyvinyl alcohol (Matlor™ 5133-32 supplied by the Lorcet company in France) was passed through the bath containing resin mixture. Excess resin mixture was removed by passing the impregnated glass-fibre mat between two rollers having a nip of 1 mm. The impregnated glass-fibre mat was then passed through an oven at a temperature of 140°C in the course of 5 min. The residual water content was 2% by weight. The average glass-fibre content was 20% by weight.

A 3 mm thick panel was then manufactured in the same way as described in Example II. The flow force determined in the same way as described in Example II was 1380 kN.

The known laminar product therefore has a much poorer flow than the laminar product according to the invention since the press force needed for the flow of the product is almost three times as high.

### Comparative Example B

Comparative Example A was repeated, but this time use was made of a nonwoven glass-fibre mat containing a binder based on polyethylene terephthalate (Matlor™ A_223 C supplied by the Lorcet company in France. The press force which was determined in the same way as described in Example II was 1970 kN.

## Claims

1. Laminar product comprising fibrous material and a thermosetting resin mixture as matrix,
characterized in that the fibrous material contains no binder and is composed of discontinuous fibres, some of which are oriented virtually perpendicularly to the plane of the sheet.

2. Laminar product according to Claim 1,
characterized in that the fibrous material comprises a nonwoven, needle-punched mat.

3. Laminar product according to one of Claims 1 or 2,
characterized in that the density of the fibrous material is less than 300 kg/m³ when compressed under a pressure of 1 kg/dm².

4. Laminar product according to one of Claims 1 - 3,
characterized in that the density of the fibrous material is less than 150 kg/m³ when compressed under a pressure of 1 kg/dm².

5. Laminar product according to one of Claims 1 - 4,
characterized in that the fibrous material has a tensile strength per unit width and per weight per unit area of 0.15 Nm/g to 1.50 Nm/g at 20°C.

6. Laminar product according to one of Claims 1 - 5,
characterized in that the fibrous material has a weight per unit area of 300 g/m² to 1000 g/m².

7. Laminar product according to one of Claims 1 - 6,
characterized in that the laminar material has a weight per unit area of 500 g/m² to 800 g/m².

8. Laminar product according to one of Claims 1 - 7,
characterized in that the thermosetting resin is chosen from the group comprising aminoplastic-formaldehyde resins and/or phenol-formaldehyde resins.

9. Laminar product according to one of Claims 1 - 8,
characterized in that the thermosetting resin is a melamine-formaldehyde resin.

10. Laminar product according to one of Claims 1 - 9,
characterized in that the product comprises 10 - 35% by weight of fibrous material and 90 - 65% by weight of resin mixture with respect to the total weight.

11. Laminar product according to one of Claims 1 - 10,
characterized in that the resin mixture comprises 30 - 70% by weight of fillers and 70 - 30% by weight of resin with respect to the total weight of the resin mixture.

12. Process for manufacturing a laminar product, in which a fibrous material, such as that described in Claims 1 - 7, is impregnated with a thermosetting resin mixture dissolved in water and the impregnated material obtained is dried.

13. Use of fibrous material in the form of a nonwoven needle-punched mat in a laminar product comprising a thermosetting resin mixture and fibrous material.

14. Commodity obtained with the aid of a product according to one of Claims 1 - 11.
